# EUROPÄISCHE PATENTSCHRIFT

(11) **EP 2 373 157 B1**
(45) Veröffentlichungstag und Bekanntmachung des Hinweises auf die Patenterteilung: **16.08.2017**
(21) Anmeldenummer: 09759909.6
(22) Anmeldetag: 28.11.2009
(51) Int. Cl.: A01N 25/04, A01N 41/10, A01P 13/02

(54) **DISPERSIONEN ENTHALTENDE INHIBITOREN DER HYDROXYPHENYLPYRUVAT-DIOXYGENASE**
DISPERSIONS CONTAINING HYDROXYPHENYLPYRUVATE-DIOXYGENASE INHIBITORS
DISPERSIONS COMPRENANT DES INHIBITEURS D'HYDROXYPHÉNYLPYRUVATE-DIOXYGÉNASE

(30) Priorität: 05.12.2008 EP 08021143
(43) Veröffentlichungstag der Anmeldung: 12.10.2011
(73) Patentinhaber: Bayer Intellectual Property GmbH, 40789 Monheim am Rhein (DE)
(72) Erfinder: PATEL, Smita, 65817 Bremthal-Eppstein (DE); MARTIN, Romy, 60488 Frankfurt (DE); BAUR, Peter, 86938 Schondorf (DE); SÜSSMANN, Rainer, 65549 Limburg (DE)
(74) Vertreter: BIP Patents
(86) Internationale Anmeldenummer: PCT/EP2009/008491
(87) Internationale Veröffentlichungsnummer: WO 2010/063423

(56) Entgegenhaltungen:
- WO-A-02/34047
- WO-A-2006/079079
- WO-A-2007/068427
- WO-A-2008/135854
- WO-A-2008/142391
- KIRKWOOD R C: "USE AND MODE OF ACTION OF ADJUVANTS FOR HERBICIDES: A REVIEW OF SOME CURRENT WORK", PEST MANAGEMENT SCIENCE, WILEY & SONS, BOGNOR REGIS, GB, Bd. 38, Nr. 2/03, 1. Januar 1993 (1993-01-01), Seiten 93-102, XP009062201, ISSN: 1526-498X

## Beschreibung

Die vorliegende Erfindung betrifft das Gebiet der Pflanzenschutzmittelformulierungen. Insbesondere betrifft die Erfindung Dispersionen enthaltend den herbiziden Wirkstoff Tembotrione.

Herbizide Wirkstoffe werden üblicherweise nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen.

Tembotrione ist als Herbizid bekannt. Als Formulierungen dieses Wirkstoffs sind bereits Suspensionskonzentrate beziehungsweise wasserdispergierbare Granulate bekannt, siehe beispielsweise "The Pesticide Manual" 13. Auflage (2003), The British Crop Protection Council. Aus EP 1 392 117 B1 sind Formulierungen verschiedener Inhibitoren der Hydroxyphenylpyruvat-Dioxygenase in Kombination mit bestimmten Düngemitteln bekannt. Aus WO 2008/142391 A1 und WO 2006/079079 A1 sind Dispersionen bekannt, die einen HPPD-Inhibitor, ein Öl, ein oder mehrere Tenside sowie ein oder mehrere Verdicker enthalten. Aus WO 2008/135854 A2 sind wasserhaltige Öl-Dispersionen enthaltend 2-Benzoyl-1,3-cyclohexandionen, darunter Tembotrione und Mesotrione, sowie Rapsölmethylester, Tenside und gegebenenfalls Verdicker bekannt. Kirkwood R. C.: "Use and Mode of Action of Adjuvants for Herbicides: A Review of Some Current Work ", Pest Management Science, Wiley & Sons, Bognor Regis, GB, Bd. 38, Nr. 2/03, 1. Januar 1993 (1993-01-01), Seiten 93-102, offenbart die Verwendung von Diammoniumhydrogenphosphat als Adjuvans in herbiziden Formulierungen. Dort wird ebenso eine Steigerung der herbiziden Wirkung durch die Kombination von Diammoniumhydrogenphosphat mit einem Tensid. WO 2007/068427 A1 beschreibt die Verbesserung der herbiziden Wirkung von Phenyl-substituierten cyclischen Ketoenolen durch den Zusatz von Ammoniumsalzen, wie Diammoniumoxalat, Diammoniumhydrogenphosphat und Ammoniumdihydrogenphosphat. Aus WO 02/34047 A1 ist die Verwendung von Düngermitteln, wie Diammoniumhydrogenphosphat, Ammoniumnitrat, Ammoniumsulfat als Adjuvans, gegebenenfalls in Kombination mit Verdicker, Mineralöl, und Tensiden, in agrochemischen Formulierungen bekannt.

Je nach Anwendungszweck werden anwenderseits Formulierungen verlangt, die einfach zu handhaben und lagerstabil sind. Die aus dem Stand der Technik bekannten Formulierungen erfüllen diese Zwecke jedoch nicht immer zufriedenstellend.

Aufgabe der vorliegenden Erfindung bestand darin, Formulierungen für Tembotrione bereit zu stellen, die die oben genannten Nachteile nicht aufweisen.

Diese Aufgabe wird gelöst durch Dispersionen, die neben Tembotrione noch Öl aus der Gruppe Pflanzen- und Mineralöle, oberflächenaktive Substanzen, rheologische Additive und bestimmte Ammoniumsalze enthalten.

Die vorliegende Erfindung betrifft somit Dispersionen enthaltend
A) 2 bis 15% Tembotrione,
B) 10 bis 80% eines oder mehrerer Pflanzen- oder Mineralöle,
C) 5 bis 30% einer oder mehrerer oberflächenaktiver Substanzen,
D) 4 bis 45% Diammoniumhydrogenphosphat oder Ammoniumdihydrogenphosphat,
E) 0,1 bis 4% eines oder mehrerer rheologischer Additive,
F) 1 bis 10% eines oder mehrerer von A) verschiedene agrochemische Wirkstoffe wie Herbizide, Insektizide, Fungizide, Safener oder Wachstumsregulatoren,
G) 0 bis 5% Formulierungs-Hilfsmittel aus der Gruppe Entschäumer, Verdunstungshemmer, Riechstoffe, Farbstoffe, Frostschutz- und Konservierungsmittel.

Die erfindungsgemäßen Dispersionen liegen in der Regel als sogenannte Öl-Dispersionen vor (OD), da die festen Komponenten, d.h. üblicherweise die Komponenten A), D), E) und F), in Öl dispergiert vorliegen.

Die erfindungsgemäßen Dispersionen zeigen eine hervorragende Lagerstabilität und eine hervorragende herbizide Wirkung. Die hervorragende Lagerstabilität äußert sich auch bei langer Lagerung in einer nur sehr geringen Neigung zur Sedimentation fester Bestandteile und in einer sehr geringen Zersetzung der Wirkstoffe A) und F).

Alle %-Angaben sind Gewichtsprozente.

Tembotrione ist dem Fachmann beispielsweise aus "The Pesticide Manual" 14th. Ed., British Crop Protection Council 2006, und der Webseite "http://www.alanwood.net/pesticides/" bekannt.

Tembotrione besitzt ein acides Proton, das durch eine Base entfernt werden kann. Die so erhältlichen Salze von Tembotrione sind ebenfalls in den erfindungsgemäßen Dispersionen als Komponente A) geeignet. Geeignete Basen sind beispielsweise Ammoniak, die Hydroxide, Carbonate und Hydrogencarbonate von Zink, Alkali- und Erdalkalimetallen, wie Natrium, Kalium, Calcium und Magnesium, und organische Basen der Formel NR¹R²R³, worin R¹, R² und R³ jeweils (C₁-C₆)-Alkyl, (C₂-C₆)-Alkenyl oder (C₂C₆)-Alkinyl, und R² und R³ darüberhinaus auch Waserstoff bedeuten können. Bevorzugt sind die Kalium-, Natrium- und Ammoniumsalze.

Geeignete Öle der Gruppe B) sind Pflanzenöle und Mineralöle. Unter dem Begriff Pflanzenöle im Sinne der vorliegenden Erfindung werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z B. in Ölen aus ölliefernden Pflanzenarten enthalten sind, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen Dispersionen z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Mineralöle sind beispielsweise aliphatische oder aromatische Kohlenwasserstoffe, wie Toluol, Xylole und Naphthalinderivate, insbesondere 1-Methylnaphthalin, 2-Methylnaphthalin, C₆-C₁₆-Aromatengemische wie z.B. die Solvesso®-Reihe (ESSO) mit den Typen Solvesso® 100 (Kp. 162-177 °C), Solvesso® 150 (Kp. 187-207 °C) und Solvesso® 200 (Kp. 219-282 °C) und Kohlenwasserstoffgemische enthaltend (C₆-C₂₀)-Aliphaten, die linear oder cyclisch sein können, wie die Produkte der Shellsol®-Reihe, Typen T und K oder BP-n Paraffine.

Geeignete oberflächenaktive Substanzen C) sind z.B. Tenside auf nichtaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte, z.B. alkoxylierte, sulfatierte, sulfonierte oder phosphatierte Pyridin-, Pyrimidin-, Triazin-, Pyrol-, Pyrolidin-, Furan-, Thiophen-, Benzoxazol-, Benzthiazol- und Triazolverbindungen, und/oder Tenside auf aromatischer Basis, z.B. mit einer oder mehreren Alkylgruppen substituierte und nachfolgend derivatisierte, z.B. alkoxylierte, sulfatierte, sulfonierte oder phosphatierte Benzole oder Phenole. Die oberflächenaktiven Substanzen C) sind im Allgemeinen in der Ölphase löslich und geeignet, diese - zusammen mit darin gelösten Wirkstoffen - bei Verdünnung mit Wasser (zur Spritzbrühe) zu emulgieren. Die erfindungsgemäßen Dispersionen können z.B. nicht aromatische oder aromatische Tenside oder Mischungen von nichtaromatischen und aromatischen Tensiden enthalten.

Beispiele für oberflächenaktiven Substanzen C) sind nachfolgend aufgeführt, worin EO für Ethylenoxid-Einheiten, PO für Propylenoxid-Einheiten und BO für Butylenoxid-Einheiten steht:
C1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-,Cycloalkyl- oder Acylrest mit 1-24 Kohlenstoffatom-Endgruppen verschlossen sein. Beispiele für derartige Verbindungen sind:
   Genapol^{®} C-, L-, O-, T-, UD-, UDD-, X-Produkte von Clariant, Plurafac^{®}- und Lutensol^{®} A-, AT-, ON-, TO-Produkte von BASF, Marlipal^{®}24- und 013 Produkte von Condea, Dehypon^{®}-Produkte von Henkel, Ethylan^{®}-Produkte von Akzo-Nobel wie Ethylan CD 120.
C2) Anionische Derivate der unter C1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Produkte, Hostaphat/Hordaphos^{®}-Produkte von Clariant. Copolymere bestehend aus EO,PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸. Alkylenoxydaddukte von C₁ - C₉ Alkoholen wie Atlox^{®}5000 von Uniquema oder Hoe^{®}-S3510 von Clariant.
C3) Fettsäure- und Triglyceridalkoxylate wie die Serdox^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von aliphatischen, cycloaliphatischen und olefinischen Carbonsäuren und Polycarbonsäuren, sowie Alpha-Sulfofettsäureester wie von Henkel erhältlich.
C4) Fettsäureamidalkoxylate wie die Comperlan^{®}-Produkte von Henkel oder die Amam^{®}-Produkte von Rhodia. Alkylenoxydaddukte von Alkindiolen wie die Surfynol^{®}-Produkte von Air Products. Zuckerderivate wie Amino- und Amidozucker von Clariant, Glukitole von Clariant, Alkylpolyglycoside in Form der APG^{®}-Produkte von Henkel oder wie Sorbitanester in Form der Span^{®}-oder Tween^{®}-Produkte von Uniquema oder Cyclodextrinester oder -ether von Wacker.
C5) Oberflächenaktive Cellulose- und Algin-, Pektin- und Guarderivate wie die Tylose^{®}-Produkte von Clariant,die Manutex^{®}-Produkte von Kelco und Guarderivate von Cesalpina. Alkylenoxydaddukte auf Polyolbasis wie Polyglykol^{®}-Produkte von Clariant. Grenzflächenaktive Polyglyceride und deren Derivate von Clariant.
C6) Alkansulfonate, Paraffin- und Olefinsulfonate wie Netzer IS^{®}, Hoe^{®}S1728, Hostapur^{®}OS, Hostapur^{®}SAS von Clariant.
C7) Alkylenoxidaddukte von Fettaminen, quartäre Ammonium-Verbindungen mit 8 bis 22 Kohlenstoffatomen (C₈-C₂₂) wie z.B. die Genamin^{®}C, L, O, T-Produkte von Clariant.
C8) Oberflächenaktive, zwitterionische Verbindungen wie Tauride, Betaine und Sulfobetaine in Form von Tegotain^{®}-Produkte von Goldschmidt, Hostapon^{®}T-und Arkopon^{®}T-Produkte von Clariant.
C9) Oberflächenaktive Verbindungen auf Silikon- bzw Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Corning, Reliance, GE, Bayer).
C10) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
C11) Grenzflächenaktive Sulfonamide z.B. von Bayer.
C12) Grenzflächenaktive Polyacryl- und Polymethacrylderivate wie die Sokalan^{®}-Produkte von der BASF.
C13) Oberflächenaktive Polyamide wie modifizierte Gelatine oder derivatisierte Polyasparginsäure von Bayer und deren Derivate.
C14)Tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF,die Vinnapas^{®}- und die Pioloform^{®}-Produkte von Wacker oder modifizierten Polyvinylalkohole wie die Mowiol^{®}-Produkte von Clariant.
C15) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
C16) Oberfächenaktive Derivate von Montan-, Polyethylen-, und Polypropylenwachsen wie die Hoechst^{®}-wachse oder die Licowet^{®}-Produkte von Clariant.
C17) Oberflächenaktive Phosphonate und Phosphinate wie Fluowet^{®}-PL von Clariant.
C18) Poly- oder perhalogenierte Tenside wie beispielsweise Emulsogen^{®}-1557 von Clariant.
C19) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
C20) Verbindungen, die formal die Umsetzungsprodukte der unter C19) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
C21) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure.

Bei den Alkylenoxyeinheiten sind Ethylenoxy-, Propylenoxy- und Butylenoxyeinheiten, insbesondere Ethylenoxyeinheiten bevorzugt.

Beispiele für oberflächenaktive Substanzen aus der Gruppe der Tenside auf nichtaromatischer Basis sind die Tenside der vorstehend genannten Gruppen C1) bis C18), vorzugsweise der Gruppen C1), C2), C6) und C7). Beispiele für oberflächenaktive Substanzen aus der Gruppe der Tenside auf Aromatenbasis sind die Tenside der vorstehend genannten Gruppen C19) bis C21) vorzugsweise mit 4 bis 10 mol Ethylenoxid umgesetztes Phenol, kommerziell beispielsweise in Form der Agrisol^{®}-Produkte (Akcros) erhältlich,
mit 4 bis 50 mol Ethylenoxid umgesetztes Triisobutylphenol, kommerziell beispielsweise in Form der Sapogenat^{®} T-Produkte (Clariant) erhältlich, mit 4 bis 50 mol Ethylenoxid umgesetztes Nonylphenol, kommerziell beispielsweise in Form der Arkopal^{®}-Produkte (Clariant) erhältlich, mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia), und saures (lineares) Dodecylbenzolsulfonat, kommerziell beispielsweise in Form der Marlon^{®}-Produkte (Hüls) erhältlich.

Bevorzugte oberflächenaktive Substanzen C) sind z.B. alkoxylierte C₁₀-C₂₄-Alkohole (C1) und deren anionische Derivate (C2) wie Sulfate, Sulfonate und Phosphate, alkoxylierte Pflanzenöle (C3), alkoxylierte Phenole (C19) und deren Umsetzungprodukte mit Schwefelsäure oder Phosphorsäure (C20) und Alkylbenzolsulfonate (C21).

Als Komponente D) wird vorzugsweise Ammoniumdihydrogenphosphat eingesetzt.

Zur Kontrolle des Sedimentationsverhaltens der dispergierten Komponenten A), D) und F) enthalten die Dispersionen als Komponente E) rheologische Additive, die auch als Verdicker bekannt sind. In Frage kommen hierbei synthetische oder natürliche mineralische Produkte und/oder insbesondere solche organische rheologische Additive, die für nichtwässrige Formulierungen geeignet sind.

Aus der Klasse der mineralischen rheologischen Additive kommen reine Kieselsäuren in Frage, z.B. vom Typ ®Sipernat, ®Wessalon oder oberflächenbehandelte Silikate wie ®Aerosil von Degussa, oder Mischoxide, z. B. Magnesium-Aluminiumsilikate wie Attapulgit (®Attagel 40, Attagel 50 von Engelhard) oder Magnesium-Schichtsilikate wie Bentonite oder Hectorite. Besonders geeignet ist z.B. ®Aerosil R202.

Weitere geeignete organische Additive zur Beeinflussung der rheologischen Eigenschaften der Formulierung sind Verdickungs- und/oder Thixotropiermittel aus der Gruppe bestimmter Polyamide wie ®Thixa SR, ®Mixatrol SR 100 oder ®Mixatrol TSR sowie Polyester wie ®Thixatrol 289; alle Produkte von Rheox. Produkte auf Basis von Rizinusöl wie ®Thixicia E, ®Thixain R, ®Thixatrol ST oder ®Thixatrol GST, ebenfalls von Rheox, erwiesen sich als besonders wirkungsvoll zur Verhinderung einer Sedimentation des HPPD Inhibitors.

Als enthaltene von Komponente A) verschiedene agrochemische Wirkstoffe F) kommen für die erfindungsgemäßen Dispersionen insbesondere die nachfolgend genannten bekannten Herbizide in Frage, wie sie in z.B. Weed Research 26, 441-445 (1986), oder "The Pesticide Manual", 14th edition, The British Crop Protection Council, 2006, und dort zitierter Literatur beschrieben sind, z.B. in Mischungsformulierungen oder als Tank-Mischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amitrol; AMS, d.h. Ammoniumsulfamat; anilofos; asulam; atrazin; azafenidine (DPX-R6447), aziprotryn; barban; BAS 516 H, d.h. 5-Fluor-2-phenyl-4H-3,1-benzoxazin-4-on; benazolin; benfluralin; benfuresate; bensulide; bentazone; benzofluor; benzoylpropethyl; benzthiazuron; bialaphos; bifenox; bispyribac-natrium (KIH-2023), bromacil; bromobutide; bromofenoxim; bromoxynil, insbesondere bromoxynil-octanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlornitrofen; chlorotoluron; chloroxuron; chlorpropham; chlorthal-dimethyl; chlorthiamid; cinidon-ethyl, cinmethylin; clethodim; clodinafop und dessen Esterderivate (z.B. clodinafoppropargyl); clomazone; clomeprop; cloproxydim; clopyralid; cumyluron (JC 940); cyanazine; cycloate; cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683); 3-(4-Ethyl-6-methoxy-1,3,5-triazin-2-yl)-1 -(2,3-dihydro-1,1-dioxo-2-methylbenzo[b]thiophen-7-sulfonyl)harnstoff (EP-A 079 683);
fenoprop; clomazone, fenoxaprop und fenoxaprop-P sowie deren Ester, z.B. fenoxaprop-P-ethyl und fenoxaprop-ethyl; butroxydimfenuron; flamprop-methyl; flufenacet (BAY-FOE-5043), fluazifop und fluazifop-P und deren Ester, z.B. fluazifopbutyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fluthiacetmethyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazapic; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metam; methazole; methoxyphenone; methyldymron; metobenzuron, Mesosulfuron-methyl, mesosulfuron-methyl (WO 95/10507); metobromuron; metolachlor; S-metolachlor, metosulam (XRD 511); metoxuron; metribuzin; maleic hydrazide; molinate; monalide; monocarbamide dihydrogensulfate; monolinuron; monuron;
MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; foramsulfuron (WO 95/01344); naproanilide; napropamide; naptalam; NC 310, d.h. 4-(2,4-dichlorbenzoyl)-1-methyl-5-benzyloxypyrazol; neburon; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; paraquat; pebulate; pendimethalin; pentoxazone (KPP-314), perfluidone; phenisopham; phenmedipham; picloram; pinoxaden; piperophos; pyributicarb; pirifenop-butyl; pretilachlor; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prynachlor; pyraflufen-ethyl (ET-751), chloridazon; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester; flazasulfuron (FMC-97285, F-6285); sulfazuron; glyphosate-trimesium (ICI-A0224); TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thiencarbazone-methyl; thidiazimin (SN-124085); thiobencarb; tiocarbazil; tralkoxydim; tri-allate; triazofenamide; triclopyr; tridiphane; trietazine; trifluralin; trimeturon; vernolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; butenachlor (KH-218); DPX-N8189; haloxyfop-etotyl (DOWCO-535); DK-8910; flumioxazin (V-53482); PP-600; MBH-001,
amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, indanofan, isoxachlortole, MCPA-thioethyl, mecoprop-P, mesotrione, metamifop, penoxsulam, pethoxamid, picolinafen, profluazol, profoxydim, pyraclonil, pyrazolynate, pyridafol, pyriftalid und thidiazuron. Bevorzugt sind atrazine, bromoxynil, foramsulfuron, metolachlor, S-metolachlor und terbuthylazine. Bromoxynil kann jeweils in Form seines Kaliumsalzes, Heptanoats oder Octanoats eingesetzt werden.

Als weitere enthaltene von Komponente A) verschiedene agrochemische Wirkstoffe F) kommen für die erfindungsgemäßen Dispersionen insbesondere die nachfolgend genannten Safener in Frage, wie sie in z.B. Weed Research 26, 441-445 (1986), oder "The Pesticide Manual", 14th edition, The British Crop Protection, 2006, und dort zitierter Literatur beschrieben sind, z.B. in Mischungsformulierungen oder als Tank-Mischpartner: mefenpyr-diethyl, isoxadifen-ethyl, cloquintocet-mexyl, cyprosulfamid, fenchlorazol-ethyl, dichlormid, benoxacor. Bevorzugt ist isoxadifen-ethyl.

Als übliche Hilfs- und Zusatzstoffe G) können in den erfindungsgemäßen Dispersionen z.B. noch enthalten sein:Netz-, Anti-Drift-, Haft-, Penetrations-, Konservierungs- und Frostschutzmittel, Antioxidantien, Füllstoffe, Trägerstoffe, Farbstoffe, Riechstoffe, Entschäumer, Verdunstungshemmer, den pH-Wert und die Viskosität beeinflussende Mittel sowie die Stablität, insbesondere Hydrolyse-Stabilität, positiv beeinflussende Mittel. Diese sind im Prinzip bekannt und werden beispielsweise in Standardwerken beschrieben: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986.

Geeignete Frostschutzmittel sind solche aus der Gruppe der Harnstoffe, Diole und Polyole, wie Ethylenglycol und Propylenglycol. Geeignete Entschäumer sind solche auf Basis von Siliconen. Geeignete strukturbildende Stoffe sind solche aus der Gruppe der Xanthane. Geeignete Konservierungsmittel, Farb- und Duftstoffe sind dem Fachmann bekannt.

Die erfindungsgemäßen Dispersionen lassen sich durch übliche, bereits bekannte Verfahren herstellen, z.B. durch Vermischen der verschiedenen Komponenten mit Hilfe von Rührern, Schüttlern, Mühlen oder (statischen) Mischern. Üblicherweise werden die festen Komponenten fein vermahlen eingesetzt.

Die erfindungsgemäßen Dispersionen zeigen ein signifikant verbessertes Applikationsverhalten, das sich in deutlich erniedrigten Siebrückständen bzw. Sieb- oder Düsenverstopfungen bemerkbar macht. Die Aufwandmenge der erfindungsgemäßen Dispersionen pro Hektar schwankt im Allgemeinen zwischen 0,5 und 5 Litern, bevorzugt zwischen 1,0 und 4,0 Litern.

Zur Anwendung können die erfindungsgemäßen Dispersionen in üblicher Weise, z.B. zu Suspensionen, Emulsionen oder Suspoemulsionen, verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder weitere Düngemittel zuzugeben. Gegenstand der vorliegenden Erfindung sind daher auch die auf solche Weise hergestellten herbiziden Mittel.

Üblicherweise beträgt das Verhältnis erfindungsgemäße Dispersion zu Wasser 1:500 bis 1:50. Die Spritzbrühe pro ha beträgt üblicherweise 50 bis 500 Liter, vorzugsweise 75 bis 350 Liter Wasser. In einigen Fällen können die hier angegebenen Grenzwerte auch unter- bzw. überschritten waren. Die Dispersionen sind auch für eine Flugzeugapplikation geeignet. Hierzu werden erfindungsgemäße Dispersionen entweder unverdünnt, verdünnt mit Wasser oder mit organischen Lösungsmitteln ausgebracht. Das Volumen an zusätzlicher Trägerflüssigkeit schwankt dabei in der Regel von 0,5 bis 50 Liter pro Hektar. Gegenstand der vorliegenden Erfindung sind daher auch solche herbiziden Mittel, auf Basis der erfindungsgemäßen Dispersionen.

Die erfindungsgemäßen Dispersionen beziehungsweise herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll: Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die erfindungsgemäßen herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

### Ausführungsbeispiele

Die in den nachfolgenden Beispielen verwendeten Begriffe bedeuten:

| | |
|---|---|
| Solvesso 200 ND | = Aromatengemisch (Kp. 219-282 °C) |
| Witconate P-1860 | = Calciumsulfonat |
| Emulsogen EL 400 | = Ethoxyliertes Rhizinusöl mit 40 Ethylenoxy-Einheiten |
| Genapol X-060 | = nichtionisches Tensid basierend auf ethoxyliertem Isotridekanol-Polyglykolether |
| Aerosil R202 | = hydrophobe Kieselsäure |

### Ausführungsbeispiel: Herstellung einer erfindungsgemäßen Dispersion

**Tabelle 1**

| Komponente | | Menge |
|---|---|---|
| A) | Tembotrione | 4,31 g |
| B) | Rapsölmethylester | 43,82 g |
| B) | Solvesso 200 ND | 15,00 g |
| C) | Atplus 309 F-LM | 9,00 g |
| C) | Witconate P-1860 | 3,00 g |
| C) | Emusolgen EL 400 | 3,00 g |
| C) | Genapol X-060 | 1,00 g |
| D) | Ammoniumdihydrogenphosphat | 14,71 g |
| E) | Aerosil R202 | 4,00 g |
| F) | Isoxadifen-ethyl | 2,16 g |

Komponente C) und wird in Komponente B) gelöst vorgelegt. Dann werden unter Rühren nach und nach die fein vermahlenen Komponenten A), E), D) und F) zugegeben und weiter gerührt bis eine homogene Dispersion entsteht.

Die so erhaltene erfindungsgemäße Dispersion ist über einen langen Zeitraum lagerstabil. Die festen Bestandteile zeigen auch bei langer Lagerung eine nur sehr geringe Neigung zur Sedimentation. Die Wirkstoffe A) und G) zeigen auch bei langer Lagerung eine nur sehr geringe Zersetzung. Die erfindungsgemäße Dispersion läßt sich mit Wasser zu einer homogenen Suspoemulsion verdünnen. Sie zeigt eine ausgezeichnete Wirkung gegen Schadpflanzen bei gleichzeitig sehr guter Verträglichkeit in Nutzpflanzenkulturen.

Die im Vergleich zu einer aus dem Stand der Technik bekannten Formulierung enthaltend Ammoniumhydrogensulfat erhöhte Lagerstabilität der erfindungsgemäßen Formulierung zeigt sich beispielsweise in Form einer geringeren Zersetzung des Wirkstoffs der Gruppe A), die bei einer Lagerung bei verschiedenen Temperaturen auftraten. Dazu wurden in einem ersten Versuch die oben genannte erfindungsgemäßen Formulierung und eine zu Vergleichszwecken ähnliche Formulierung enthaltend 21° C Ammoniumhydrogensulfat an Stelle von Ammoniumdihydrogenphosphat jeweils gemäß oben beschriebener Methode hergestellt und 8 Wochen bei 40° C gelagert. Danach wurde der Zersetzungsgrad des Wirkstoffs der Gruppe A) bestimmt. In einem zweiten Versuch wurde der Zersetzungsgrad des Wirkstoffs der Gruppe A) nach einer Lagerung von 8 Wochen bei einer Temperatur von 40° C bestimmt. Die Ergebnisse in Tabelle 3 zeigen, dass die erfindungsgemäße Formulierung unter beiden Lagerungsbedingungen eine geringere Zersetzung des Wirkstoffs der Gruppe A) zeigen als die jeweils rezepturgleiche Formulierung enthaltend Ammoniumhydrogensulfat.

**Tabelle 2**

| | | **erfindungsgemäß** | **Vergleichsformulierung** |
|---|---|---|---|
| Komponente | | Menge | Menge |
| A) | Tembotrione | 4,31 g | 4,31 g |
| B) | Rapsölmethylester | 43,82 g | 43,82 g |
| B) | Solvesso 200 ND | 15,00 g | 15,00 g |
| C) | Atplus 309 F-LM | 9,00 g | 9,00 g |
| C) | Witconate P-1860 | 3,00 g | 3,00 g |
| C) | Emusolgen EL 400 | 3,00 g | 3,00 g |
| C) | Genapol X-060 | 1,00 g | 1,00 g |
| D) | Ammoniumdihydrogenphosphat | 14,71 g | 0 g |
| D) | Ammoniumhydrogensulfat | 0 g | 14,71 g |
| E) | Aerosil R202 | 4,00 g | 4,00 g |
| F) | Isoxadifen-ethyl | 2,16 g | 2,16 g |

**Tabelle 3**

| Formulierung | Zersetzung des Wirkstoffs Tembotrione nach Lagerung | |
|---|---|---|
| | 8 Wochen bei 21° C | 8 Wochen bei 40° C |
| erfindungsgemäß Vergleich | 0% | 2,6% |
| | 4,6% | 7,9% |

**Tabelle 2**

| | | **erfindungsgemäß** | **Vergleichsformulierung** |
|---|---|---|---|
| Komponente | | Menge | Menge |
| A) | Tembotrione | 4,31 g | 4,31 g |
| B) | Rapsölmethylester | 43,82 g | 43,82 g |
| B) | Solvesso 200 ND | 15,00 g | 15,00 g |
| C) | Atplus 309 F-LM | 9,00 g | 9,00 g |
| C) | Witconate P-1860 | 3,00 g | 3,00 g |
| C) | Emusolgen EL 400 | 3,00 g | 3,00 g |
| C) | Genapol X-060 | 1,00 g | 1,00 g |
| D) | Ammoniumdihydrogenphosphat | 14,71 g | 0 g |
| D) | Ammoniumhydrogensulfat | 0 g | 14,71 g |
| E) | Aerosil R202 | 4,00 g | 4,00 g |
| F) | Isoxadifen-ethyl | 2,16 g | 2,16 g |

**Tabelle 3**

| Formulierung | Zersetzung des Wirkstoffs Tembotrione nach Lagerung | |
|---|---|---|
| | 8 Wochen bei 21° C | 8 Wochen bei 40° C |
| erfindungsgemäß Vergleich | 0% | 2,6% |
| | 4,6% | 7,9% |

## Patentansprüche

1. Dispersionen, enthaltend
A) 2 bis 15% Tembotrione,
B) 10 bis 80% eines oder mehrerer Pflanzen- oder Mineralöle,
C) 5 bis 30% einer oder mehrerer oberflächenaktiver Substanzen,
D) 4 bis 45% Diammoniumhydrogenphosphat oder Ammoniumdihydrogenphosphat,
E) 0,1 bis 4% eines oder mehrerer rheologischer Additive,
F) 1 bis 10% eines oder mehrerer von A) verschiedene agrochemische Wirkstoffe wie Herbizide, Insektizide, Fungizide, Safener oder Wachstumsregulatoren,
G) 0 bis 5% Formulierungs-Hilfsmittel aus der Gruppe Entschäumer, Verdunstungshemmer, Riechstoffe, Farbstoffe, Frostschutz- und Konservierungsmittel.

2. Dispersionen nach Anspruch 1, enthaltend Ammoniumdihydrogenphosphat als Komponente D).

3. Dispersionen nach Anspruch 1 oder 2, enthaltend als weiteren agrochemischen Wirkstoff Isoxadifen-ethyl.

4. Verwendung einer Dispersion gemäß einem oder mehreren der Ansprüche 1 bis 3 zur Herstellung eines herbiziden Mittels.

5. Flüssiges herbizides Mittel, erhältlich durch Verdünnen einer Dispersion gemäß einem oder mehreren der Ansprüche 1 bis 3.

6. Verwendung einer Dispersion gemäß einem oder mehreren der Ansprüche 1 bis 3 oder eines herbiziden Mittels nach Anspruch 5, zur Bekämpfung von unerwünschtem Pflanzenwuchs.

7. Verfahren zur Bekämpfung von unerwünschtem Pflanzenwuchs, worin eine wirksame Menge einer Dispersion gemäß einem oder mehreren der Ansprüche 1 bis 3 oder eines herbiziden Mittels nach Anspruch 5 auf die Pflanzen, Teile der Pflanzen, das Saatgut oder die Fläche auf der Pflanzen wachsen, appliziert wird.

## Claims

1. Dispersions comprising
A) 2 to 15% of tembotrione
B) 10 to 80% of one or more vegetable or mineral oils,
C) 5 to 30% of one or more surface-active substances,
D) 4 to 45% of diammonium hydrogen phosphate or ammonium dihydrogen phosphate,
E) 0.1 to 4% of one or more rheological additives,
F) 1 to 10% of one or more agrochemical active substances other than A), such as herbicides, insecticides, fungicides, safeners or growth regulators,
G) 0 to 5% of formulation auxiliaries from the group consisting of antifoams, evaporation inhibitors, perfumes, colorants, antifreeze agents and preservatives.

2. Dispersion according to Claims 1, comprising, as component D), ammonium dihydrogen phosphate.

3. Dispersions according to Claim 1 or 2, comprising, as further agrochemical active substance, isoxadifen-ethyl.

4. Use of a dispersion according to one or more of Claims 1 to 3 for the preparation of a herbicidal composition.

5. Liquid herbicidal composition, obtainable by diluting a dispersion according to one or more of claims 1 to 3.

6. Use of a dispersion according to one or more of Claims 1 to 3 or of a herbicidal composition according to claim 5, for controlling undesired vegetation.

7. Method of controlling undesired vegetation, wherein an effective amount of a dispersion according to one or more of Claims 1 to 3 or of a herbicidal composition according to Claim 5 is applied to the plants, parts of the plants, the seed or the area on which plants grow.

## Revendications

1. Dispersions, contenant :
A) 2 à 15 % de tembotrione,
B) 10 à 80 % d'une ou de plusieurs huiles végétales ou minérales,
C) 5 à 30 % d'une ou de plusieurs substances tensioactives,
D) 4 à 45 % d'hydrogénophosphate de diammonium ou de dihydrogénophosphate d'ammonium,
E) 0,1 à 4 % d' un ou de plusieurs additifs rhéologiques,
F) 1 à 10 % d'un ou de plusieurs agents actifs agrochimiques différents de A), tels que des herbicides, des insecticides, des fongicides, des agents protecteurs ou des régulateurs de croissance,
G) 0 à 5 % d'adjuvants de formulation du groupe constitué par les antimousses, les inhibiteurs d'évaporation, les substances odorantes, les colorants, les antigels et les conservateurs.

2. Dispersions selon la revendication 1, contenant du dihydrogénophosphate d'ammonium en tant que composant D).

3. Dispersions selon la revendication 1 ou 2, contenant de l'isoxadifène-éthyle en tant qu'agent actif agrochimique supplémentaire.

4. Utilisation d'une dispersion selon une ou plusieurs des revendications 1 à 3 pour la fabrication d' un agent herbicide.

5. Agent herbicide liquide, pouvant être obtenu par dilution d'une dispersion selon une ou plusieurs des revendications 1 à 3.

6. Utilisation d'une dispersion selon une ou plusieurs des revendications 1 à 3 ou d'un agent herbicide selon la revendication 5, pour lutter contre une végétation indésirable.

7. Procédé de lutte contre une végétation indésirable, selon lequel une quantité efficace d'une dispersion selon une ou plusieurs des revendications 1 à 3 ou d'un agent herbicide selon la revendication 5 est appliquée sur les plantes, des parties des plantes, les graines ou la surface sur laquelle les plantes poussent.
